# EUROPÄISCHE PATENTSCHRIFT

(11) **EP 3 269 008 B1**
(45) Veröffentlichungstag und Bekanntmachung des Hinweises auf die Patenterteilung: **24.04.2019**
(21) Anmeldenummer: 16720324.9
(22) Anmeldetag: 04.03.2016
(51) Int. Cl.: H01Q 9/28, H01Q 21/20, H01Q 21/29, G01S 13/75, H01Q 1/34, H01Q 3/44

(54) **MULTIFUNKTIONS-ANTENNENSYSTEM MIT RADAR-REFLEKTOR**
MULTI-FUNCTION ANTENNA SYSTEM WITH RADAR REFLECTOR
SYSTÈME D'ANTENNE MULTIFONCTION PRÉSENTANT UN RÉFLECTEUR POUR RADAR

(30) Priorität: 09.03.2015 DE 202015001972 U
(43) Veröffentlichungstag der Anmeldung: 17.01.2018
(73) Patentinhaber: Sputnik24 Communication Systems GmbH, 04275 Leipzig (DE)
(72) Erfinder: WÖTZEL, E., Frank, 04277 Leipzig (DE)
(74) Vertreter: Müller, Wolfram Hubertus
(86) Internationale Anmeldenummer: PCT/DE2016/000105
(87) Internationale Veröffentlichungsnummer: WO 2016/141912

(56) Entgegenhaltungen:
- WO-A1-2004/038452
- US-A- 4 117 485
- US-A- 5 872 546
- US-A1- 2005 162 332
- US-B1- 7 518 565

## Beschreibung

Die Erfindung betrifft ein Multifunktions-Antennensystem mit RADAR-Reflektor mit extrem hoher Breitbandigkeit, das bei kleinen Abmessungen eine hohe Effizienz für Kommunikationsanwendungen erreicht und insbesondere für mobile Anwendungen geeignet ist.

Die mobile Kommunikation nimmt einen wesentlichen Anteil in der Gestaltung der privaten, geschäftlichen und Maschine-zu-Maschine Anwendungen ein. Der Bandbreitenbedarf hat sich in den vergangen Jahren dramatisch erhöht.
Zur Deckung der unterschiedlichen Bedarfsfelder wurden neue Technologien entwickelt, Frequenzbänder erweitert oder für die mobile Kommunikation freigegeben. Gleichzeitig erhöhen sich die Nachfrage und die Erfordernisse zur gesicherten Übertragung von Ereignissen, sensorischen Werten oder Positions- und Navigationsdaten, die möglichst in Echtzeit nutzbar sein sollten.
Die Erhöhung der Datenraten verlangt eine ebenso deutliche Ausweitung der genutzten Frequenzbereiche zur Kommunikation.
Durch die bisher mit internationaler Koordinierung erfolgte Verteilung der Frequenzen sind die zur Verfügung stehenden Ressourcen knapp und die nutzbaren Frequenzbereiche liegen nicht direkt beieinander. Daraus folgt, dass ein heutiges Antennensystem eine drastisch höhere Bandbreite abdecken muss und für verschiedene Prinzipien der Kommunikation nutzbar sein sollte.
Mit steigendem Gradienten findet die sogenannte 4G bzw. LTE Technologie Verbreitung. Die technische Auslegung von LTE erfordert vom Nutzerterminal Antennen, die für sich die Multiple-Input, Multiple-Output MIMO Technologie eignen, um einen hohen Datendurchsatz zu gewährleisten. Gleichzeitig ist die maximale effektive Sendeleistung des Terminals durch Gesetzgebung beschränkt, so dass hier die regulatorischen Auflagen nicht überschritten werden dürfen.
Die sogenannte Zellengröße einer Mobilfunkzelle wird durch die Betreiber auf eine optimale Kundenabdeckung ausgelegt. Daraus folgt, dass die Zellengröße in Ballungsgebieten wesentlich kleiner ist als in Gebieten mit geringer Bevölkerungsdichte. Kleine Zellengrößen bedeuten technisch jedoch auch, dass die Anforderungen an das sogenannte Link-Budget wesentlich geringer sind, u.a. durch den relativ geringen Abstand zwischen Terminal und Mobilfunk-Sendemast. Dadurch können auch wenig effiziente Antennen am Terminal eingesetzt werden ohne drastische Einbußen im Datendurchsatz in Kauf nehmen zu müssen.
Anders verhält sich dieser Umstand in ländlichen Bereichen oder gar in küstennahen Gewässern.
Extrem hohe Anforderungen ergeben sich bei Anwendungen der mobilen Kommunikation auf Wasserfahrzeugen und Fluggeräten.
Die Anzahl und Art der Kommunikationsanwendungen ist ungleich größer als zum Beispiel bei Landfahrzeugen und unterliegt deutlich härteren Forderungen an das einzusetzende Antennensystem. Hinzu kommt die meist große Entfernung zum nächstgelegenen Mobilfunk-Sendemast bei der Verwendung von z.B. LTE.
Das Antennensystem muss daher hocheffizient und bestmöglich an die Verwendungsbedingungen angepasst sein. Verluste, zum Beispiel durch schlechte Effizienz des Antennensystems, sind unbedingt zu vermeiden. Erschwerende Faktoren für maritime Anwendungen sind das sehr geringe Platzangebot für Antennen, die bereits existierende Vielzahl von anderen Antennen, die harten Umweltbedingungen, erhebliche mechanische Beanspruchungen und die Existenz einer Vielzahl hochenergetischer Störquellen, wie zum Beispiel von Radar-Anlagen in unmittelbarer Umgebung.

In der Schifffahrt sind zur Vermeidung von Unfällen, Kollisionen und gefährlichen Situationen eine Reihe von Anlagen und Verfahren vorgeschrieben, wie zum Beispiel das Vorhandensein und die Verwendung von Radar-Anlagen.
Bauartbedingt verfügen nicht alle Wasserfahrzeuge über den gleichen Radarquerschnitt und sind unter Umständen kaum vom Verkehrsradar eines anderen Schiffes erfassbar. Dies ist zum Beispiel bei kleinen Yachten, Fischerbooten und Seglern der Fall. Der Einsatz von zusätzlichen Radarreflektoren ist vorgeschrieben bzw. in manchen Regionen zumindest dringend empfohlen, um die Sichtbarkeit, d.h. den Radarquerschnitt des Wasserfahrzeuges zu erhöhen.

Viele Antennen sind ausschließlich auf die Verwendung einer Polarisation und/oder eines Frequenzbereiches ausgelegt. Die Kombination verschiedener Frequenzbereiche und Polarisationen unter Gewährleistung einer hohen Trennung/Isolation innerhalb einer Antennenanordung erscheint gemäß dem Stand der Technik problematisch.

Die Erfordernisse zum Schutz nachliegender Baugruppen gegen Überlastung durch andere Dienste hoher Leistung, zum Beispiel RADAR-Anwendungen, werden bisher in Antennen nur unzureichend oder gar nicht berücksichtigt.

Omnidirektionale Breitbandantennen sind sowohl aus der mobilen Kommunikation als auch der Kommunikation von festen Standorten seit langem bekannt. In Rothammel, Karl: "Antennenbuch (10. Auflage)" und Hall, Gerald L./ARLL: The ARRL Antenna Book (13. Auflage)" sind sogenannte Discone Antennen beschrieben, die eine omnidirektionale Richtcharakteristik im Azimut aufweisen und über eine Breitbandigkeit von bis zu 1:5 verfügen. Von Nachteil sind insbesondere der Aufbau, Größe und Beschränkung auf eine Polarisationsebene sowie die Werte in der Anpassung der Antenne, VSWR (Voltage Standing Wave Ratio) und die direkte Exposition der Struktur zur Umwelt.

In DE 30 46 255 A1 wird eine Breitbandantenne für das Radio-Frequenzband beschrieben, die eine an eine Monopol-Antenne angekoppelte Transmission-Linie aufweist. Nachteilig sind auch hier Aufbau, Größe und Beschränkung auf eine Polarisationsebene. Besonders kritisch ist das beschriebene VSWR von 1:2,5. Dieser Wert führt zu starken Reflexionen und einer Verschlechterung der Leistungsübertragung und der Anpassung von Folgebaugruppen. Weiterhin handelt es sich um eine klassische Monopol-Antennenstruktur mit einer sogenannten Groundplane. Dadurch konzentriert sich die Abstrahlung der Energie mit zunehmender Frequenz auf höhere Elevationswinkel.

Die in DE 202 20 086 U1 beschriebene Antenne eignet sich sehr gut als Richtantenne, weist dementsprechend keine omnidirektionale Charakteristik des Antennendiagramms im Azimut auf. Nachteilig sind insbesondere der beschränkte Frequenzbereich und die komplizierte Ansteuerung. MIMO Anwendungen sind eingeschränkt möglich.

In EP 1 542 314 A1 wird ein dreidimensionale Monopol Design für sogenannte UWB (Ultra Wide Band) Anwendungen beschrieben. Die UWB Kommunikation hat insbesondere zum Ziel, zwischen räumlich sehr nahe aneinander befindlichen Geräten, zum Beispiel auf einem Schreibtisch, sehr hohe Datenraten bei der Vernetzung der Geräte zu ermöglichen. Die beschriebenen Anordnungen stellen wie bei DE 30 46 255 A1 eine Monopol-Antenne über einen Groundplane dar, so dass die Anordnung zwar gut für eine Installation an Geräten, zum Beispiel Laptops geeignet ist, sich eine Konzentration der omnidirektionalen Abstrahlung mit einer Vorzugsrichtung bei null Grad Elevation konstruktionsbedingt breitbandig nicht erreichen lässt und nicht dem Gegenstand der beschriebenen Anordnung entspricht. Nachteilig ist ebenfalls, dass keine der dargestellten Ausführungen eine Breitbandigkeit von über 1:3,5 erlaubt. Ein weiterer Nachteil besteht darin, dass MIMO Anwendungen, die wie bei LTE auf verschiedenen Polarisationen beruhen, nicht möglich erscheinen.

Die in EP 2 683 030 A1 wiedergegebene Monopol-Antenne weist eine hohe Breitbandigkeit von 1 auf. Wie aus Fig. 2A und Fig. 2B ersichtlich wird, kann nachteiligerweise die Abstrahlung der Antenne nicht omnidirektional in der azimutalen Ebene konzentriert werden. Ein zusätzlicher Nachteil ergibt sich aus der vorzugsweisen Anordnung der Antenne innerhalb der elektronischen Schaltung, wodurch die Antenne in Effizienz und Gewinn sehr stark beschränkt ist.

In DE 20 2013 102 314 U1 wird eine Antennenanordnung für MIMO-Anwendungen beschrieben, die gut für LTE Anwendungen geeignet erscheint. Gewinn und Polarisationstrennung eignen sich für die Verwendung an Terminals mit größerer Entfernung zur nächsten LTE Basisstation. Nachteilig sind die fehlende omnidirektionale Abstrahlung und die eingeschränkte Bandbreite von maximal 1:3,3 bezogen auf die erste nutzbare Frequenz.

Von Nachteil sind weiterhin die mechanische Ausführung und die fehlenden Integrationsmöglichkeiten anderer Kommunikationsdienste und die Anfälligkeit gegenüber mechanischen Schwingungen.

Die in DE 102 35 222 A1 beschriebene Breitband-Antenne ist als Monopol mit Dipol ausgebildet und weist nachteilig nur in einem Teil des verwendbaren Frequenzbereiches eine omnidirektionale Antennencharakteristik in azimutaler Ebene mit Konzentration der Strahlung in null Grad Elevationsebene auf. Ein weiterer Nachteil ist die geringe Effizienz im unteren Frequenzbereich. Die Antenne ist gemäß dem Ausführungsbeispiel nicht für Kommunikationsdienste GSM, 3G oder LTE geeignet. Die mit guter Effizienz verwendbare Bandbreite liegt in einem Verhältnis von 1:6. Die Ausführungsform ist mit dem Nachteil eines sehr geringen Radarquerschnitts verbunden. Nachteilig ist ebenfalls die Art der mechanischen Konstruktion, die ein freies Schwingen der Antenne bei Einwirkung von Vibrationen erlaubt.

In US 2005/162332 A1 wird eine Antenne mit zwei symmetrisch über Kreuz in einem Winkel von 90 Grad angeordneten bipolaren Strahlerelementen beschrieben. In US 4 117 485 A wird ein Radarreflektor mit einer variablen Impedanz beschrieben.

Die vorgenannten Anordnungen sind nicht oder nur extrem eingeschränkt als Radar-Reflektor geeignet.

Die bisher bekannten und anhand der Beispiele aufgeführten Antennenkonstruktionen weisen unbefriedigende Eigenschaften hinsichtlich ihrer Verwendbarkeit für eine Multifunktionsantenne einer sehr hohen Bandbreite, kleiner Abmessungen bei hoher Effizienz und als Radar-Reflektor auf.

Zur Erhöhung der Radar-Sichtbarkeit von Wasserfahrzeugen kommen sogenannte Radar-Reflektoren zum Einsatz. Problematisch wirken sich der zusätzliche Platzbedarf und die Formgebung aus. Passive Radar Reflektoren werden in unterschiedlichen Ausführungsformen im Handel angeboten und variieren in der Größe zwischen ca. 25cm und 50 cm Durchmesser (Kugelausführung) oder in einer Höhe von 30 cm bis 70 cm (Röhrenausführung). Die Radar-Reflektoren ermöglichen die Erhöhung des Radarquerschnittes auf eine technisch gute Weise. Von erheblichen Nachteil ist deren Nichteignung für andere Kommunikationsdienste.

Der Erfindung liegt daher die Aufgabe zugrunde, ein multifunktionales kompaktes Antennensystem hoher Breitbandigkeit mit Radar-Reflektor bereitzustellen, das in der Lage ist, eine omnidirektionale Antennencharakteristik in azimutaler Ebene auszuprägen, die Strahlung in der Elevationsebene nahe null Grad umlaufenden Elevationswinkel zu maximieren und das eine hohe mechanische Stabilität aufweist.

Erfindungsgemäß wird die Aufgabe durch ein Multifunktions-Antennensystem mit Radar-Reflektor gelöst bei dem die Antenne
- mindestens zwei bipolare Strahlerelemente, davon mindestens ein primär gespeistes Strahlerelement und/oder mindestens ein sekundär gespeistes Strahlerelement umfasst,
- das primär gespeiste und das sekundär gespeiste Strahlerelement symmetrisch über Kreuz in einem Winkel von 90 Grad +/- 10 Grad angeordnet und mindestens an ihrer Kreuzungsstelle miteinander elektrisch verbunden sind,
- das primär und das sekundär gespeiste Strahlerelement als leitfähige Flächen bipolar auf und/oder in einem dielektrischer Träger ausgeführt und mit diesem fest verbunden sind,
- die leitfähigen Flächen von innen nach außen abnehmend ausgeführt sind und die Abnahme der Flächen durch lineare und nichtlineare Abschnitte bestimmt ist,
- das primäre gespeiste Strahlerelement über mindestens eine Leitung zur Ein- und Auskopplung von elektromagnetischen Signalen verfügt,
- das primär gespeiste Strahlerelement die sekundären Strahlerelemente speist und
- innenliegend in der Antenne in der speisenden Leitung auf dem dielektrischen Träger Filter aus planaren Strukturen und/oder aus einer Kombination von planaren Strukturen mit konzentrierten Bauelementen zur Reflektion von Signalen von Radar-Aussendungen angeordnet sind.

Eine besondere Ausführungsform der Erfindung sieht vor, dass neben den zwei orthogonal miteinander verbundenen Strahlerelementen in einem Winkelversatz von jeweils 45 Grad weitere sekundär gespeiste Strahlerelemente so angeordnet sind, dass sie sich um die gleiche mittlere Symmetrieebene befinden und elektrisch mit dem primär gespeisten Strahlerelement und mindestens einem sekundär gespeisten Strahlerelement verbunden sind.

Erfindungsgemäß ist die Antenne nach oben und unten, orthogonal zur Symmetrieebene, mit jeweils einem metallischen Körper bedeckt und sind das primär gespeiste Strahlerelement und das sekundär gespeiste Strahlerelement mit diesen Körpern leitfähig und mechanisch verbunden.

Vorzugsweise sind die metallischen Körper als leitfähige Boxen zur Aufnahme weitere Baugruppen ausgebildet und/oder sind an mindestens einem dielektrischen Träger außerhalb des Bereiches einer Metallisierung eine elektrisch isolierte Kontaktstelle zur Aufnahme weiterer Antennen angebracht ist.

Nach einer weiteren Ausführungsform ist die Verbindung von mindestens zwei Strahlerelementen in Schlitz-Steck-Technik ausgeführt.

Vorteilhafterweise sind an den leitfähigen Aufnahmeboxen zusätzliche nach dem Stand der Technik bekannte Antennen angeordnet.

Eine weitere Ausführungsform sieht vor, dass zwischen dem Speisepunkt und nachfolgenden Baugruppen Filter zur Reflektion von Signalen von Radar-Aussendungen angebracht sind.

Gemäß einer weiteren Ausführungsform ist an mindestens einem primär gespeisten Strahlerelement und/oder sekundär gespeisten Strahlerelement und/oder sekundär gespeisten Hilfselement ein weiteres Strahlerelement in der gleichen Ebene oder orthogonal dazu angeordnet wobei das zusätzlich angeordnete Strahlerelement geeignet ist, eine breitbandige orthogonale Polarisation zu erzeugen.

Das erfindungsgemäße Multifunktions-Antennensystem ermöglicht mit seiner sehr kompakten Bauform gleichzeitig den Empfang und das Senden verschiedenster Signale in einem extrem weiten Frequenzbereich von ca. 440 MHz bis ca. 11 GHz bei einem gleichmäßig niedrigen VSWR von weniger als 1:2,5. Eine hocheffiziente Übertragung elektromagnetischer Signale unterschiedlichster Zwecke ist erfindungsgemäß in einem extrem weiten Frequenzbereich mit nur einer Antenne realisierbar. Sie weist eine hohe Polarisationsreinheit auf und ermöglicht auf einfache Art die Ankopplung von Folgebaugruppen.

Mit dem erfindungsgemäßen Antennensystem verbindet sich weiterhin der Vorteil, dass durch die zusätzliche Verwendung von weiteren Antennen anderer Polarisation, eine hohe Entkopplung zwischen den Polarisationen realisierbar ist und damit unter anderem die besondere Eignung für MIMO Anwendungen, zum Beispiel für LTE, gegeben ist.

Mit dem erfindungsgemäßen Antennensystem verbindet sich der weitere Vorteil, dass die Hauptabstrahlrichtung weitestgehend im gesamten nutzbaren Frequenzbereich in der Elevation bei null Grad umlaufend, omnidirektional, ist und sich dadurch ganz besondere Vorteile für die Übertragung von Signalen zu oder von weit entfernten Kommunikationspartnern ergeben, da naturgemäß diese Partner mit zunehmender Entfernung sich im Bereich sehr geringer Elevationswinkel befinden. Besonders herausragend ist dieser Vorteil im Bereich maritimer Anwendungen, so in der Elevationsebene von 450 MHz bis 3000 MHz und 9400 MHz.

Weiteren Vorteile ergeben sich daraus, dass nachfolgende Baugruppen wirksam gegen schädlicher Radarsignale geschützt sind und die Energie der Radarsignale, die über die Antenne empfangen wird, größtenteils nicht in Wärme umgesetzt, sondern durch Filtern zeitlich versetzt in niedriger Elevation wieder abgestrahlt wird, wodurch sich der Radarquerschnitt deutlich erhöht.

Gleichzeitig besteht der Vorzug, dass Radarsignale durch die Geometrie der Anordnung der Bauelemente besonders gut reflektiert werden. Unter Radarsignalen sollen Signale von Radaranlagen im maritimen Anwendungsbereich verstanden werden.

Ein weiterer wesentlicher Vorzug des erfindungsgemäßen Antennensystems besteht in der Möglichkeit, weitere Antennen auf oder an den Aufnahmeboxen anzubringen, die durch die hohe Entkopplung frequenzüberlappend, zum Beispiel für Satellitendienste geeignet sind (GPS, GLONASS, INMARSAT, THURAYA...).

Ein weiterer wesentlicher Vorteil der erfindungsgemäßen Anordnung besteht in ihrer hohen mechanischen Stabilität, bei gleichzeitig einfachen Fertigungsmöglichkeiten und der Verwendung von einfach zu beschaffenden widerstandsfähigen Materialien.

Gleichzeitig verbindet sich mit der erfindungsgemäßen Anordnung der Vorteil der hohen Wiederholbarkeit aller elektrischen und mechanischen Eigenschaften und der hohen Stabilität gegen Umwelteinflüsse.

Im Folgenden soll die Erfindung an einem Ausführungsbeispiel näher erläutert werden. Es zeigen:
- **Fig. 1a**: Vorderseite des primär gespeisten Strahlerelements
- **Fig. 1b**: Rückseite des primär gespeisten Strahlerelements
- **Fig. 2a**: Vorderseite des sekundär gespeisten Strahlerelements
- **Fig. 2b**: Rückseite des sekundär gespeisten Strahlerelements
- **Fig. 3a**: Vorderseite des sekundär gespeisten Hilfselements
- **Fig. 3b**: Rückseite des sekundär gespeisten Hilfselements
- **Fig. 4a**: Isometrische Ansichtsskizze der getrennten Anordnung der Strahlerelemente
- **Fig. 4b**: Isometrische Ansichtsskizze der verbundenen Anordnung der Strahlerelemente
- **Fig. 4c**: Draufsicht der verbundenen Anordnung der Strahlerelemente
- **Fig. 5**: Konstruktive Rückansicht des sekundär gespeisten Elements
- **Fig. 6**: Konstruktive Rückansicht des primär gespeisten Elements
- **Fig. 7**: Isometrische Ansicht der Antenne
- **Fig. 8**: Isometrische Zusammenbauansicht der Antenne
- **Fig. 9**: Oberen Aufnahmebox
- **Fig. 10**: Untere Aufnahmebox
- **Fig. 11**: Ansicht von unten der oberen Aufnahmebox
- **Fig. 12**: Ansicht von unten der unteren Aufnahmebox
- **Fig. 13**: Ansicht der Antenne von unten
- **Fig. 14**: Elevationsdiagramm bei 450 MHz
- **Fig. 15**: Elevationsdiagramm bei 2800 MHz
- **Fig. 16**: Elevationsdiagramm bei 9400 MHz
- **Fig. 17**: VSWR Diagramm
- **Fig. 18**: Montagedarstellung
- **Fig. 18a**: Äußere Schutzhülle (Radom)

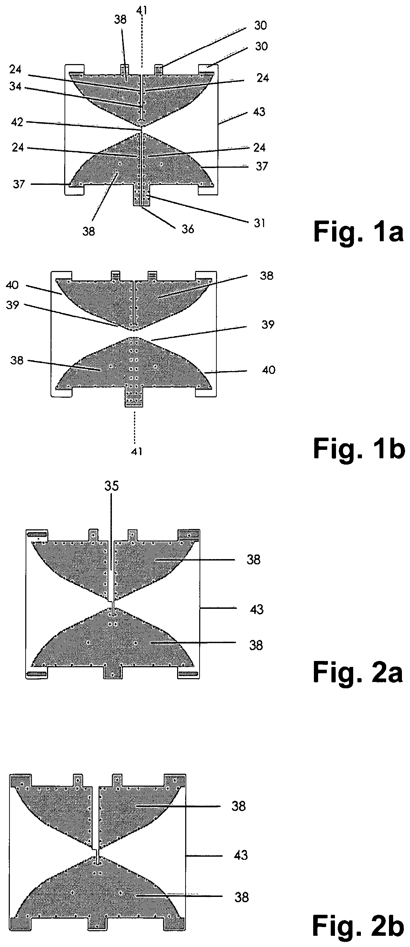

Die **Fig. 1a** zeigt die Vorderseite und **Fig. 1b** die Rückseite des primär gespeisten bipolaren Strahlerelements 21, bestehend aus einem dielektrischen Träger 43 auf dem auf Vorder- und Rückseite leitfähige Flächen 38 fest angebracht sind. **Fig. 1a** zeigt die Speisung des bipolaren Strahlerelements mittels einer Leitung 42, beginnend von einem Speisepunkt 36 am Rande des dielektrischen Trägers 43. Dabei ist der Speisepunkt 36 gleichzeitig als elektrisches und mechanisches Verbindungselement 31 ausgeführt. Die Speisung der später hinzuzufügenden sekundär gespeisten Strahlerelemente 22 erfolgt in vertikaler Ausrichtung an den mit 24 bezeichneten Kanten der leitfähigen Flächen. Der obere Teil des primär erregten Strahlerelements ist mit einem Schlitz 34 zur passgenauen Aufnahme eines sekundär gespeisten Strahlerelements 22 versehen. Die leitfähigen Flächen 38 nehmen in der Mitte des dielektrischen Trägers 43 entlang der Symmetrieebene 41 ihre größte vertikale Ausdehnung ein und fallen dann hin zu den Rändern in einem speziellen Verhältnis in Zonen mit linearem 39 und nichtlinearem 40 Begrenzungsverlauf ab. Dabei verfügen die leitfähigen Flächen 38 über eine innere Symmetrie zur Achse 41 und weitestgehend ebenfalls über eine Symmetrie orthogonal dazu, verlaufend durch die Mitte des dielektrischen Trägers 43. Vorder- und Rückseite des dielektrischen Trägers 43 sind an Stellen 37 mit leitfähigem Material elektrisch verbunden. Die leitfähigen Flächen 38 auf Vorder- und Rückseite sind übereinanderliegend in ihrer Form identisch. Weiterhin verfügt der dielektrische Träger 43 über Befestigungs- und Verbindungselemente 30 die zu seiner Befestigung und Verbindung mit der oberen bzw. unteren Aufnahmebox 27, 28 dienen. Die elektrisch leitfähige Beschichtung dieser Elemente ist nicht der effektiven Wirkfläche der Antenne zuzurechnen, da sie sich im Ausführungsbeispiel innenliegend in einer Aufnahmebox befindet.

Die äußeren Befestigungselemente 32 sind im vorliegenden Ausführungsbeispiel zusätzlich so ausgebildet, dass sie weitere Antennen 17, 171 aufnehmen können.

Die dielektrischen Eigenschaften des Trägers, die Anordnung, Größe und Geometrie bestimmen die elektrischen Eigenschaften des primär gespeisten Elements und üben Einfluss auf das gesamte Antennensystem aus.

**Fig. 2a** und **Fig. 2b** stellen Vorder- und Rückseite des sekundär gespeisten Strahlerelements 22 dar, das ebenfalls aus einem dielektrischen Träger 43 mit aufgebrachten Leitfähigen Flächen 38 besteht, die über elektrische Verbindungen zusammengeschaltet sind. Die Geometrie der leitfähigen Flächen entspricht weitestgehend der des primär gespeisten Elementes 21 mit Ausnahme des Schlitzes 35, der abschnittsweise breiter ausgeführt wurde, um eine einfache Montage zu ermöglichen. Die Dicke und Dielektrizitätszahl des dielektrischen Trägers 43 sind identisch zum Träger des primär gespeisten Elementes.

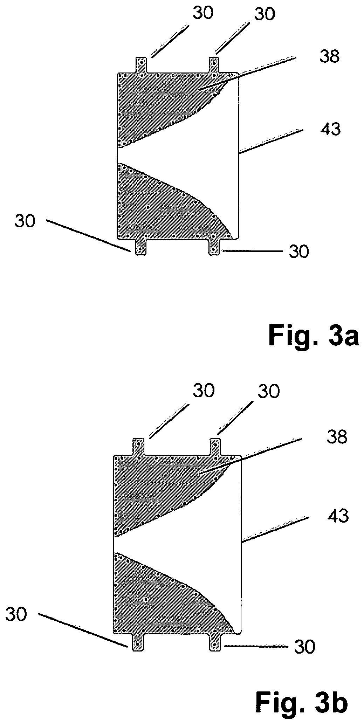

**Fig. 3a** und **Fig. 3b** zeigen die Vorder- und Rückseite eines sekundär gespeisten Hilfselementes bestehend aus einen dielektrischen Träger 43 gleicher Dicke und Dielektrizitätszahl wie der anderen Strahlerlemente 21, 22 mit einer leitfähigen Beschichtung 38 und Befestigungs- und elektrischen Verbindungselementen außerhalb der wirksamen Aperturfläche der Antenne (da diese in die Aufnahmeboxen 27; 28 hineinragen). Die sekundär gespeisten Hilfselemente weisen die gleichend Ausdehnungen in der Vertikalen an ihren Montageflächen auf, sind jedoch in der Horizontalen um die doppelte Dicke der Strahlerelemente 21, 22 reduziert.

Die Geometrie und Aufbau der leitfähigen Flächen entspricht weitestgehend der Hälfte der Strahlerelemente 21, 22 und ist in der horizontalen Ausdehnung um die Dicke der Strahlerelemente reduziert.

Vorder- und Rückseite sind deckungsgleich ausgeführt und leitfähig miteinander verbunden.

Die Realisierung der Strahlerelemente gemäß **Fig. 1a** bis **Fig. 3b** erfolgt auf einem herkömmlichen Leiterplattenmaterial unter Nutzung von Durchkontaktierungen zur Herstellung der beschriebenen leitfähigen Verbindungen.

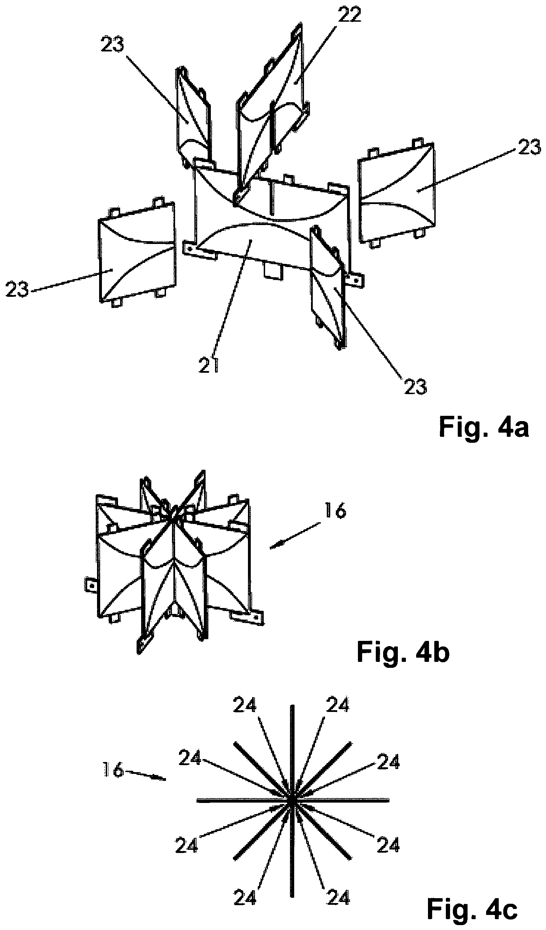

Die prinzipielle Anordnung des primär gespeisten Strahlerelements 21 mit dem sekundär gespeisten Strahlerelement 22 und vier sekundär gespeisten Hilfselementen 23 geht aus **Fig. 4a** hervor. Der Zusammenbau erfolgt indem das sekundär gespeiste Strahlerelement 22 in das primär gespeiste Strahlerelement 21 eingesteckt wird und durch die Gestaltung der Schlitze 34, 35 über einen Formschluss gegeneinander fixiert werden. Die vier sekundär gespeisten Hilfselemente werden jeweils in einem Winkel von 45 Grad dazu angeordnet. Den prinzipiellen Aufbau der sich daraus ergebenden inneren Strahleranordnung 16 zeigt **Fig. 4b****.** In **Fig. 4c** ist die Draufsicht auf diese Strahleranordnung. Die leitfähigen Flächen werden an den Stellen 24 elektrisch durch Lötverfahren miteinander verbunden.

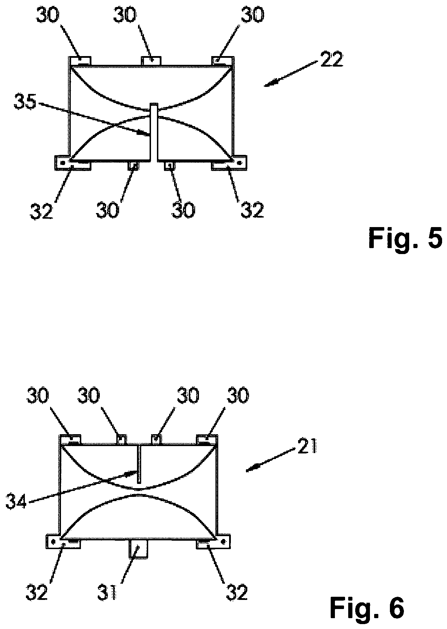

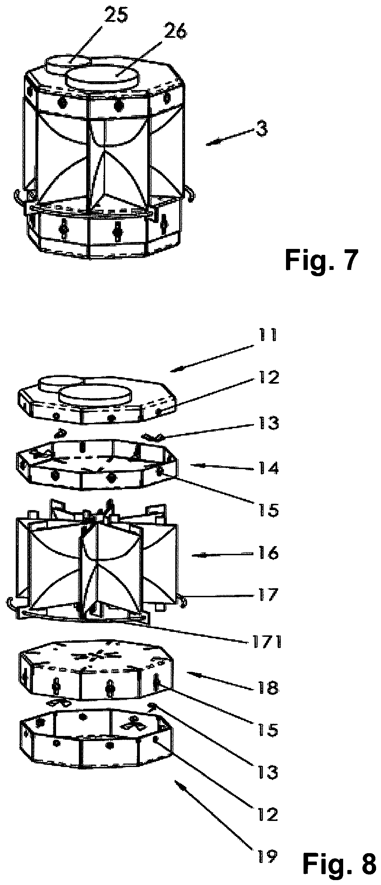

In **Fig. 5** und **Fig. 6** sind das sekundär gespeiste Strahlerelement 22 und das primär gespeiste Strahlerelement 23 schematisch so dargestellt, dass das Befestigungs- und Verbindungselement 32 in einer speziellen Ausführungsform insgesamt viermal vorhanden ist. An diesen Stellen 32 können weitere Antennen 17, 171 befestigt und gespeist werden, wie in **Fig. 7, Fig. 8** und **Fig. 9** deutlich dargestellt ist.

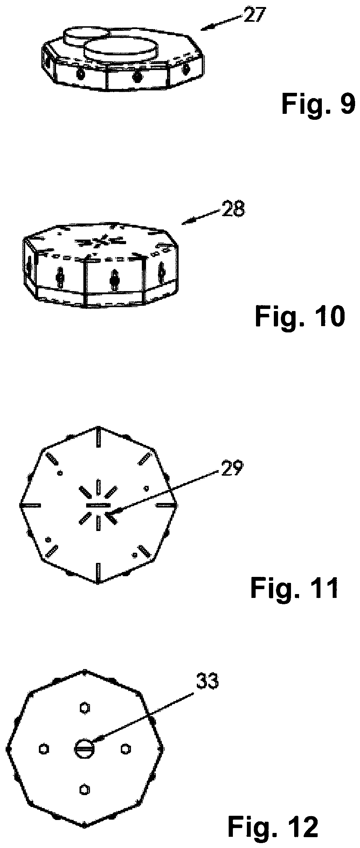

Im vorliegenden Ausführungsbeispiel wird die innere Strahleranordnung zwischen zwei leitfähigen Aufnahmeboxen 27, 28 gemäß **Fig. 9** und **Fig. 10****,** mechanisch abschließend mit den Strahlerelementen elektrisch leitfähig verbunden und ergibt eine breitbandige Multifunktionsantenne mit Radar-Reflektor.

Die Verbindung erfolgt gemäß **Fig. 8** sowohl über mechanische Verbindungselemente 13 als auch mit Hilfe eines weiteren Formschlusses, dergestalt, dass sowohl im Boden der oberen leitfähigen Anschaltbox 27 als auch im Deckel der unteren leitfähigen Anschaltbox 28 die Wandung durchdringende Schlitze eingefügt sind, die passgenau mit den Verbindungselementen 30, 31 der primär und sekundär gespeisten Strahlerelemente 21 und 22 und der sekundär gespeisten Hilfselemente 23 übereinstimmen. Die Anordnung wird dergestalt zusammengefügt und allen Verbindungsstellen elektrisch kontaktiert und innerhalb der Aufnahmeboxen zusätzlich mittels Halte- und Verbindungselementen stabil fixiert. Im Ausführungsbeispiel wird eine Lötverbindung zur Herstellung der elektrischen Verbindung als auch zur Erhöhung der mechanischen Stabilität gewählt. Die durchgehenden Schlitze 29 sind in ihrer Längsrichtung mit einem Übermaß ausgelegt, um Fertigungstoleranzen einfach kompensieren zu können.

In der isometrischen Ansicht gemäß **Fig. 7** sind zwei weitere Antennen 25, 26 nach dem Stand der Technik angebracht.

**Fig. 8** zeigt eine Übersicht der zur Herstellung des in **Fig.7** abgebildeten erfindungsgemäßen Multifunktions-Antennensystem mit RADAR-Reflektor benötigten Komponenten, ein oberes Gehäuseteil 11 der oberen leitfähigen Aufnahmebox 27 auf dem zusätzliche Antennen 25, 26 nach dem Stand der Technik angebracht sind und dass über Befestigungselemente 12 verfügt, an denen das zugehörige Unterteil 14 mechanisch und elektrisch befestigt wird, sowie die Halte- und Verbindungselemente 13 zur Fixierung der inneren Strahleranordnung 16, die weiteren Strahlerelemente 17, 171 nach dem Stand der Technik und das daran zu befestigende Oberteil 18 der unteren Aufnahmebox 28 mit Halte- und Befestigungselementen 13 sowie Befestigungselementen 15. An den Befestigungselementen 15 wird das untere Gehäuseteil 14 der unteren Aufnahmebox 28 mechanisch und elektrisch verbunden.

**Fig. 11** zeigt die Ansicht auf die Unterseite der oberen Aufnahmebox 27 mit Schlitzen 29, die die Wandung durchdringen.

**Fig. 12** zeigt die Ansicht auf die Unterseite der unteren Aufnahmebox 28 mit dem elektrischen Ein- und Ausgang des Ausführungsbeispiels.

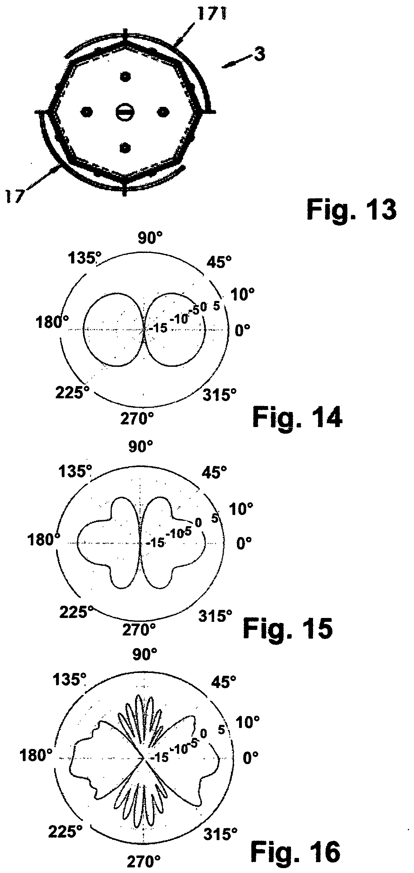

In **Fig. 13** wird die Ansicht von unten auf die erfindungsgemäße Anordnung gemäß Ausführungsbeispiel wiedergegeben, um die Anbringung der weiteren Strahlerelemente 17, 171 nach Stand der Technik zu verdeutlichen.

Die obere und untere Aufnahmebox werden in einem Stanz-Falz-Verfahren oder Laser-Falz-Verfahren hergestellt und bestehen aus lötbaren Metallverbindungen.

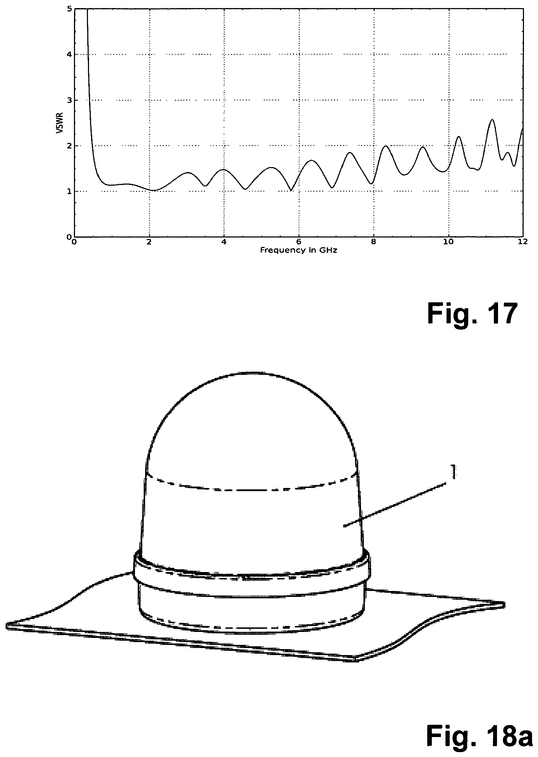

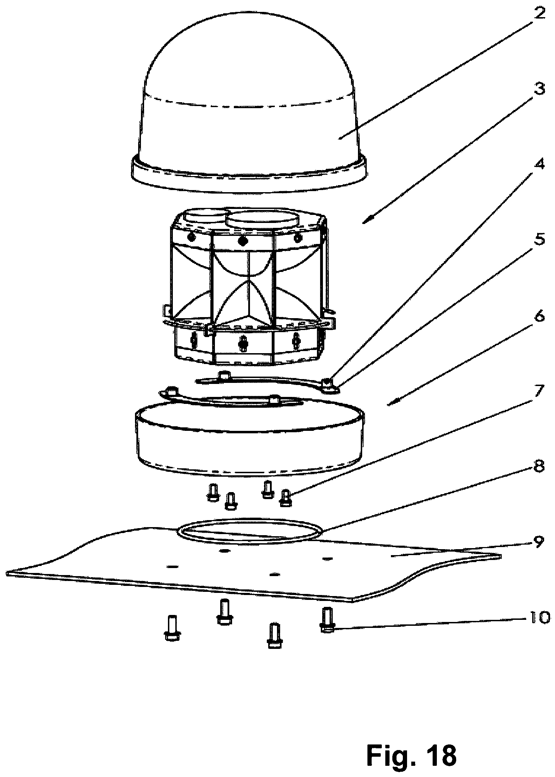

In **Fig. 18** wird eine verwendungsgemäße Montage des erfindungsgemäßen Antennensystems des vorliegenden Ausführungsbeispiels innerhalb eines aus Kunststoff bestehenden Radoms 1 bestehend aus einem Oberteil 2 und einem Unterteil 6 mit Hilfe von Befestigungselementen 4, 5, 7, 8, 10 und eines Dichtelements 8 an einer nicht ebenen Fläche 9 dargestellt.

Das dargestellte Ausführungsbeispiel betrifft eine besonders bevorzugte Ausführungsform der Erfindung, ohne diese auf dieses Beispiel zu beschränken.

In einer hier nicht dargestellten Ausführung kann das Unterteil 6 mittels Bolzen und einer Andruckplatte mit dem unteren Gehäuseteil 19 der unteren Aufnahmebox 28 verbunden sein, wobei die Einspeisung für die gesamte Anordnung auf die Andruckplatte verlagert werden kann. Die Weiterleitung kann durch standardisierte Verbindungselemente oder Kabel erfolgen.

### BEZUGSZEICHENAUFSTELLUNG

- 1: Äußere Schutzhülle (Radom)
- 2: Oberteil der äußeren Schutzhülle (Radom)
- 3: Radar-Reflektor
- 4: Befestigungselement
- 5: Befestigungselement
- 6: Unterteil der äußeren Schutzhülle (Radom)
- 7: Dichtelement zum Schutz gegen eindringendes Wasser
- 8: Befestigungselement
- 9: Unterlage zur Befestigung der äußeren Schutzhülle (Radom)
- 10: Befestigungselement zum Anbringen der äußeren Schutzhülle
- 11: Oberes Gehäuseteil der oberen Aufnahmebox 27 mit weiteren Strahlerelementen
- 12: Befestigungselement
- 13: Halte- und Verbindungselement
- 14: Unteres Gehäuseteil der oberen Aufnahmebox 27
- 15: Befestigungselement
- 16: Innere Strahleranordnung
- 17,: 171 Strahlerelemente
- 18: Oberes Gehäuseteil der unteren Aufnahmebox (28)
- 19: Unteres Gehäuseteil der unteren Aufnahmebox (28)
- 20: Befestigungselement
- 21: Primär gespeistes Strahlerelement
- 22: Sekundär gespeistes Strahlerelement
- 23: Sekundär gespeistes Hilfselement
- 24: Elektrischer Verbindungsbereich zwischen sekundär und primär gespeisten Strahlerelement
- 25: Weitere Antenne nachdem Stand der Technik
- 26: Weitere Antenne nachdem Stand der Technik
- 27: Obere Aufnahmebox
- 28: Untere Aufnahmebox
- 29: Schlitze, Wandung durchdringend
- 30: Befestigungs- und elektrisches Verbindungselement
- 31: Elektrisches und mechanisches Verbindungselement des Speisepunktes
- 32: Befestigungs- und elektrisches Verbindungselement mit Wellenleiter
- 33: Elektrischer Ein- und Ausgang der gesamten Baugruppe
- 34: Aufnahmeschlitz im primär gespeisten Strahlerelement
- 35: Aufnahmeschlitz im sekundär gespeisten Strahlerelement
- 36: Speisepunkt
- 37: Elektrische Verbindung
- 38: Leitfähige Fläche
- 39: Linearer Steigung der Begrenzung der Leiterfläche
- 40: Nichtlinear Steigung der Begrenzung der Leiterfläche
- 41: Symmetrie-Achse
- 42: Leitung
- 43: Dielektrischer Träger

## Patentansprüche

1. Multifunktions-Antennensystem mit Radar-Reflektor mit,
- mindestens zwei bipolaren Strahlerelementen, davon mindestens ein primär gespeistes Strahlerelement (21) und mindestens ein sekundär gespeistes Strahlerelement (22), wobei
- die Strahlerelemente (21; 22) symmetrisch über Kreuz in einem Winkel von 90 Grad +/- 10 Grad angeordnet und mindestens an ihrer Kreuzungsstelle (24) miteinander elektrisch verbunden sind,
- die Strahlerelemente (21, 22) als leitfähige Flächen (38) bipolar auf oder in einem dielektrischer Träger (43) ausgeführt und mit diesem fest verbunden sind,
- die leitfähigen Flächen (38) von innen nach außen abnehmend ausgeführt sind und die Abnahme der Flächen (38) durch lineare (39) und nichtlineare (40) Abschnitte bestimmt ist,
- das primäre gespeiste Strahlerelement (21) über mindestens eine Leitung (42) zur Ein- und Auskopplung von elektromagnetischen Signalen (36) verfügt,
- das primär gespeiste Strahlerelement (21) die sekundären Strahlerelemente (22) speist,
-- die Antenne nach oben und unten, orthogonal zur Symmetrieebene (41), mit jeweils einem metallischen Körper bedeckt ist und das primär gespeiste Strahlerelement (21) und das sekundär gespeiste Strahlerelement (22) mit diesen Körpern leitfähig und mechanisch verbunden sind und
- innenliegend in der Antenne in der speisenden Leitung (42) auf dem dielektrischen Träger (43) Filter aus planaren Strukturen und/oder aus einer Kombination von planaren Strukturen mit konzentrierten Bauelementen zur Reflektion von Signalen von Radar-Aussendungen angeordnet sind.

2. Antennensystem nach Anspruch 1, **dadurch gekennzeichnet, dass** die metallischen Körper als leitfähige Boxen (27; 28) zur Aufnahme weiterer Baugruppen, so zum Schutz gegen schädliche Radarsignale und zur Aufnahme von Filtern ausgebildet sind.

3. Antennensystem nach Anspruch 2, **dadurch gekennzeichnet, dass** an den leitfähigen Aufnahmeboxen (27, 28) zusätzliche Antennen angeordnet sind.

4. Antennensystem nach mindestens einem der Ansprüche 1 bis 3, **dadurch gekennzeichnet, dass** neben zwei orthogonal miteinander verbundenen Strahlerelementen (21, 22) in einem Winkelversatz von jeweils 45 Grad weitere sekundär gespeiste Strahlerelemente (23) so angeordnet sind, dass sie sich um die gleiche mittlere Symmetrieebene (41) befinden und elektrisch mit dem primär gespeisten Strahlerelement (21) und mindestens einem sekundär gespeisten Strahlerelement (22) verbunden sind.

5. Antennensystem nach mindestens einem der Ansprüche 1 bis 4, **dadurch gekennzeichnet, dass** an mindestens einem dielektrischen Träger (43) außerhalb des Bereiches der Metallisierung (38) eine elektrisch isolierte Kontaktstelle (32) zur Aufnahme weiterer Antennen (17; 171) angebracht ist.

6. Antennensystem nach mindestens einem der Ansprüche 1 bis 5, **dadurch gekennzeichnet, dass** die Verbindung von mindestens zwei Strahlerelementen (21, 22) in Schlitz-Steck-Technik ausgeführt ist.

7. Antennensystem nach mindestens einem der Ansprüche 1 bis 6, **dadurch gekennzeichnet, dass** zwischen dem Speisepunkt (36) und nachfolgenden Baugruppen Filter zur Reflektion von Signalen von Radar-Aussendungen angebracht sind.

8. Antennensystem nach mindestens einem der Ansprüche 1 bis 7, **dadurch gekennzeichnet, dass** an mindestens einem primär gespeisten Strahlerelement (21) und/oder sekundär gespeisten Strahlerelement (22) und/oder sekundär gespeisten Hilfselement (23) ein weiteres Strahlerelement in der gleichen Ebene oder orthogonal dazu angeordnet ist.

9. Antennensystem nach Anspruch 9, **dadurch gekennzeichnet, dass** das weitere Strahlerelement geeignet ist, breitbandig eine orthogonale Polarisation zu erzeugen.

## Claims

1. Multi-function antenna system with a radar reflector, having
- at least two bipolar radiating elements, at least one of which is a primary-fed radiating element (21) and/or at least one of which is a secondary-fed radiating element (22),
- the radiating elements (21; 22) being symmetrically arranged in a cross-wise manner at an angle of 90° +/- 10° and being electrically connected to one another at least at their intersection (24),
- the radiating elements (21, 22) being in the form of bipolar conductive surfaces (38) on or in a dielectric carrier (43) and being permanently connected to the latter,
- the conductive surfaces (38) decreasing from the inside outward and the decrease in the surfaces (38) being determined by linear sections (39) and non-linear sections (40),
- the primary-fed radiating element (21) having at least one line (42) for coupling electromagnetic signals (36) in and out,
- the primary-fed radiating element (21) feeding the secondary radiating elements (22),
- the antenna being covered toward the top and bottom with a metal body in each case, in a manner orthogonal to the plane of symmetry (41), and the primary-fed radiating element (21) and the secondary-fed radiating element (22) being conductively and mechanically connected to these bodies, and
- filters comprising planar structures and/or a combination of planar structures with concentrated components for reflecting signals from radar transmissions being arranged on the inside of the antenna in the feeding line (42) on the dielectric carrier (43).

2. Antenna system according to Claim 1, **characterized in that** the metal bodies are in the form of conductive boxes (27; 28) for receiving further assemblies and are thus designed to protect against harmful radar signals and to receive filters.

3. Antenna system according to Claim 2, **characterized in that** additional antennas are arranged on the conductive receiving boxes (27, 28).

4. Antenna system according to at least one of Claims 1 to 3, **characterized in that,** in addition to two radiating elements (21, 22) which are orthogonally connected to one another in an angular offset of 45° in each case, further secondary-fed radiating elements (23) are arranged in such a manner that they are around the same central plane of symmetry (41) and are electrically connected to the primary-fed radiating element (21) and at least one secondary-fed radiating element (22).

5. Antenna system according to at least one of Claims 1 to 4, **characterized in that** an electrically insulated contact point (32) for receiving further antennas (17; 171) is fitted to at least one dielectric carrier (43) outside the region of the metallization (38).

6. Antenna system according to at least one of Claims 1 to 5, **characterized in that** the connection of at least two radiating elements (21, 22) is designed using slot/plug technology.

7. Antenna system according to at least one of Claims 1 to 6, **characterized in that** filters for reflecting signals from radar transmissions are fitted between the feed point (36) and following assemblies.

8. Antenna system according to at least one of Claims 1 to 7, **characterized in that** a further radiating element is arranged at at least one primary-fed radiating element (21) and/or secondary-fed radiating element (22) and/or secondary-fed auxiliary element (23) in the same plane or orthogonal thereto.

9. Antenna system according to Claim 9, **characterized in that** the further radiating element is suitable for producing orthogonal polarization in broadband.

## Revendications

1. Système d'antenne multifonction avec réflecteur radar, comprenant
- au moins deux éléments rayonnants bipolaires, parmi lesquels au moins un élément rayonnant (21) alimenté primaire et au moins un élément rayonnant (22) alimenté secondaire,
- les éléments rayonnants (21 ; 22) étant disposés selon une symétrie en croix à un angle de 90 degrés +/- 10 degrés et étant reliés électriquement l'un à l'autre au moins au niveau de leur point d'intersection (24),
- les éléments rayonnants (21 ; 22) étant réalisés sous la forme de surfaces conductrices (38) bipolaires sur ou dans un élément porteur (43) diélectrique et étant reliés à demeure à celui-ci,
- les surfaces conductrices (38) étant réalisées en se réduisant de l'intérieur vers l'extérieur et la réduction des surfaces (38) étant définie par des portions linéaires (39) et non linéaires (40),
- l'élément rayonnant (21) alimenté primaire disposant d'au moins une ligne (42) destinée à l'injection et au découplage de signaux électromagnétiques (36),
- l'élément rayonnant (21) alimenté primaire alimentant les éléments rayonnants (22) secondaires,
- l'antenne étant respectivement recouverte par un corps métallique vers le haut et le bas, orthogonalement par rapport au plan de symétrie (41), et l'élément rayonnant (21) alimenté primaire ainsi que l'élément rayonnant (22) alimenté secondaire étant reliés de manière conductrice et mécaniquement avec ces corps et
- des filtres constitués de structures planes et/ou d'une combinaison de structures planes comprenant des éléments structuraux concentrateurs destinés à réfléchir les signaux des émissions radar étant disposés à l'intérieur de l'antenne dans la ligne d'alimentation (42) sur l'élément porteur (43) diélectrique.

2. Système d'antenne selon la revendication 1, **caractérisé en ce que** les corps métalliques sont réalisés sous la forme de boîtes (27 ; 28) conductrices destinées à accueillir des sous-ensembles supplémentaires, à les protéger ainsi contre les signaux radar dommageables et à accueillir des filtres.

3. Système d'antenne selon la revendication 2, **caractérisé en ce que** des antennes supplémentaires sont disposées au niveau des boîtes d'accueil (27, 28) conductrices.

4. Système d'antenne selon au moins l'une des revendications 1 à 3, **caractérisé en ce qu'**outre deux éléments rayonnants (21, 22) reliés orthogonalement l'un à l'autre, des éléments rayonnants (23) alimentés secondaires supplémentaires avec un décalage angulaire respectif de 45 degrés sont disposés de telle sorte qu'ils se trouvent dans le même plan de symétrie central (41) et sont reliés électriquement à l'élément rayonnant (21) alimenté primaire et à au moins un élément rayonnant (22) alimenté secondaire.

5. Système d'antenne selon au moins l'une des revendications 1 à 4, **caractérisé en ce qu'**un point de contact (32) électriquement isolé destiné à accueillir des antennes (17 ; 171) supplémentaires est monté au niveau d'au moins un élément porteur (43) diélectrique en-dehors de la zone de la métallisation (38).

6. Système d'antenne selon au moins l'une des revendications 1 à 5, **caractérisé en ce que** la liaison d'au moins deux éléments rayonnants (21, 22) est réalisée en technique d'insertion à fente.

7. Système d'antenne selon au moins l'une des revendications 1 à 6, **caractérisé en ce que** des filtres destinés à réfléchir les signaux des émissions radar sont montés entre le point d'alimentation (36) et les sous-ensembles suivants.

8. Système d'antenne selon au moins l'une des revendications 1 à 7, **caractérisé en ce qu'**un élément rayonnant supplémentaire est disposé au niveau d'au moins un élément rayonnant (21) alimenté primaire et/ou d'un élément rayonnant (22) alimenté secondaire et/ou d'un élément auxiliaire (23) alimenté secondaire dans le même plan ou orthogonalement à celui-ci.

9. Système d'antenne selon la revendication 9, **caractérisé en ce que** l'élément rayonnant supplémentaire est adapté pour générer en large bande une polarisation orthogonale.
